# EUROPÄISCHE PATENTSCHRIFT

(11) **EP 2 971 354 B1**
(45) Veröffentlichungstag und Bekanntmachung des Hinweises auf die Patenterteilung: **21.09.2016**
(21) Anmeldenummer: 14708877.7
(22) Anmeldetag: 10.03.2014
(51) Int. Cl.: E01B 9/02, E01B 9/40, E01B 9/44, F16B 21/08

(54) **SCHIENENBEFESTIGUNG MIT CLIP-BEFESTIGUNG ZWISCHEN FÜHRUNGS- UND UNTERLEGPLATTE**
RAIL FASTENING SYSTEM COMPRISING A SNAP-FIT CONNECTION BETWEEN THE GUIDE PLATE AND THE BASE PLATE
FIXATION DE RAILS COMPRENANT UN RACCORDEMENT PAR CLIPSAGE ENTRE LA PLAQUE DE GUIDAGE ET LA PLAQUE DE BASE

(30) Priorität: 13.03.2013 DE 102013102531
(43) Veröffentlichungstag der Anmeldung: 20.01.2016
(73) Patentinhaber: Vossloh-Werke GmbH, 58791 Werdohl (DE)
(72) Erfinder: BÖSTERLING, Winfried, 58809 Neuenrade (DE); BEDNARCZYK, Adrian, 58511 Lüdenscheid (DE)
(74) Vertreter: Cohausz & Florack
(86) Internationale Anmeldenummer: PCT/EP2014/054543
(87) Internationale Veröffentlichungsnummer: WO 2014/139925

(56) Entgegenhaltungen:
- DE-U1-202011 050 739

## Beschreibung

Die Erfindung betrifft ein System zum Befestigen einer Schiene auf einem Untergrund, das
- eine Unterlegplatte, die eine Aufstandfläche für die zu befestigende Schiene aufweist, und
- mindestens eine Führungsplatte umfasst, die auf der Unterlegplatte sitzt und eine von ihrer freien Oberseite zu ihrer auf der Unterlegplatte aufliegenden Unterseite führende Öffnung für ein Spannelement aufweist, das bei fertig montiertem System durch die Öffnung geführt und mit dem Untergrund fest verbunden ist,
- wobei eine Rastverbindung zwischen der Unterlegplatte und der Führungsplatte im Bereich der Öffnung der Führungsplatte durch mindestens einen Rastarm gebildet ist, der durch die Öffnung der Führungsplatte greift und an seinem freien Ende einen Rastvorsprung aufweist, der mit einem an der Führungsplatte ausgebildeten Anschlag formschlüssig zusammenwirkt.

Ein System, das die voranstehend aufgezählten Merkmale aufweist, ist aus dem deutschen Gebrauchsmuster DE 20 2011 050 739 U1 bekannt. Um die Rastverbindung zwischen der Unterlegplatte und der Führungsplatte herzustellen, sind dabei die Rastarme so an der Unterlegplatte ausgebildet, dass sie durch die Durchgangsöffnung der Führungsplatte greifen und mit dem die Durchgangsöffnung umgrenzenden oberen Rand der Führungsplatte verrasten. Der Vorteil dieser Ausgestaltung besteht dabei darin, dass sich auf diese Weise jede bekannte Führungsplatte mit der Unterlegplatte verkoppeln lässt, ohne dass dazu die jeweilige Führungsplatte verändert werden muss. In der Praxis kann dieser Vorteil jedoch nur im geringen Maße genutzt werden. So ist es im Fall, dass ein marktübliches Spannelement, beispielsweise eine Schraube, ein Schraubenbolzen oder ein Nagel, zum Befestigen des Systems auf dem jeweiligen Untergrund verwendet werden soll, für eine einfache und sichere Montage des bekannten Systems erforderlich, dass der lichte Durchmesser der Öffnung der Führungsplatte so an den Außendurchmesser des Spannelements angepasst ist, dass das Spannelement auch bei in die Öffnung greifendem Rastarm mit ausreichendem Spiel durch die Öffnung schiebbar ist. Da das betreffende Spannelement üblicherweise nicht direkt auf der Führungsplatte abgestützt ist, sondern direkt nur auf das auf der Führungsplatte sitzende Federelement wirkt, behindern die durch die Öffnung der Führungsplatte greifenden Rastelemente dann die Funktion des Spannelements nicht. In vielen Fällen ist jedoch ein zu großes Übermaß des Öffnungsquerschnitts der Führungsplatte gegenüber dem jeweiligen Spannmittel unerwünscht, da dadurch die exakte Positionierung der Führungsplatte in Bezug auf das Spannmittel oder den Untergrund erschwert wird.

Vor dem Hintergrund des voranstehend erläuterten Standes der Technik bestand die Aufgabe der Erfindung darin, ein System der voranstehend beschriebenen Art zu schaffen, bei dem die Montage auf dem jeweiligen Untergrund weiter vereinfacht ist.

Erfindungsgemäß wird diese Aufgabe durch ein System mit dem in Anspruch 1 angegebenen Merkmalen gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes System zum Befestigen einer Schiene auf einem Untergrund umfasst in Übereinstimmung mit dem eingangs angegebenen Stand der Technik eine Unterlegplatte, die eine Aufstandfläche für die zu befestigende Schiene aufweist, und mindestens eine Führungsplatte, die auf der Unterlegplatte sitzt und eine von ihrer freien Oberseite zu ihrer auf der Unterlegplatte aufliegenden Unterseite führende Öffnung für ein Spannelement aufweist, das bei fertig montiertem System durch die Öffnung geführt und mit dem Untergrund fest verbunden ist. Dabei ist eine Rastverbindung zwischen der Unterlegplatte und der Führungsplatte im Bereich der Öffnung der Führungsplatte durch mindestens einen Rastarm gebildet, der durch die Öffnung der Führungsplatte greift und an seinem freien Ende einen Rastvorsprung aufweist, der mit einem an der Führungsplatte ausgebildeten Anschlag formschlüssig zusammenwirkt.

Erfindungsgemäß ist nun in die die Öffnung der Führungsplatte begrenzende Umfangsfläche eine Ausnehmung eingeformt, in der der jeweils zugeordnete Rastarm sitzt. Bei einem erfindungsgemäßen System ist demgemäß im Bereich der für das Spannmittels vorgesehenen Durchgangsöffnung der Führungsplatte ein zusätzlicher Raum vorhanden, der bei mit der Unterlegplatte verrasteter Führungsplatte den jeweiligen von der Unterlegplatte ausgehenden Rastarm aufnimmt. Die Durchgangsöffnung selbst muss somit den Rastarm nicht mehr zusätzlich zum Spannmittel aufnehmen. In Folge dessen kann der Öffnungsquerschnitt der Durchgangsöffnung optimal an den Querschnitt des Spannmittels so angepasst sein, dass das Spannmittel eng in der Durchgangsöffnung geführt ist. Dabei wirkt der jeweils formschlüssig in der ihm zugeordneten Ausnehmung der Führungsplatte sitzende Rastarm als Verdrehsicherung, durch die jede größere Drehung der Führungsplatte um eine durch die Durchgangsöffnung der Führungsplatte verlaufende Achse bzw. um die Längsachse des im fertig montierten Zustand in der Durchgangsöffnung steckenden Spannmittels verhindert wird.

Bei einem erfindungsgemäßen System ist auf diese Weise mit denkbar einfachen Mitteln eine exakte Ausrichtung der Bauteile "Führungsplatte" und "Unterlegplatte" in Relation zueinander und zum festen Untergrund, auf dem die jeweilige Schiene mit Hilfe des erfindungsgemäßen Systems befestigt werden soll erreicht. Gleichzeitig ist die einfache Vormontage von Führungsplatte und Unterlegplatte problemlos möglich, da die Verrastung dieser beiden Bauteile in der an sich bekannten Weise prinzipiell unverändert stattfinden kann. An der Baustelle kann die aus der mindestens einen Führungsplatte und der Unterlegplatte gebildete Baueinheit auf einfache Weise auf den entsprechend vorbereiteten Untergrund gesetzt werden.

Unabhängig davon, ob die Führungsplatte und die Unterlegplatte getrennt voneinander oder als vormontierte Baueinheit an der Baustelle montiert werden, ist durch die erfindungsgemäß mittels einer Rastverbindung gebildete formschlüssige Verbindung zwischen Führungsplatte und Unterlegplatte sichergestellt, dass die Führungsplatte und die Unterlegplatte am Montageort zueinander ordnungsgemäß ausgerichtet sind, ohne dass dazu die Positionierung der Führungsplatte und der Unterlegplatte mit einer besonderen Sorgfalt vorgenommen werden muss. Infolge der Verrastung von Führungsplatte und Unterlegplatte ist es nur noch erforderlich, die Unterlegplatte am festen Untergrund in der erforderlichen Weise zu positionieren. Ein umständliches Ausrichten der Führungsplatte in Bezug auf die Unterlegplatte entfällt dann ebenso wie die Notwendigkeit, die ordnungsgemäße Lage der Führungsplatte vor der Montage der weiteren Bauelemente eines erfindungsgemäßen Systems zu überprüfen.

Mit der Erfindung steht somit ein System zum Befestigen einer Schiene auf einem Untergrund zur Verfügung, das sich durch besonders einfache Montierbarkeit auszeichnet und bei dem gleichzeitig mit geringem Aufwand die lagerichtige Ausrichtung der einzelnen Bauteile des Systems im fertig montierten Zustand auf einfache Weise gesichert ist.

In Bezug auf die Herstellbarkeit der in einem erfindungsgemäßen System vorgesehenen Unterlegplatte erweist es sich als zweckmäßig, wenn dem Rastarm eine in die Unterlegplatte eingeformte Ausnehmung zugeordnet ist, die seitlich an eine Seitenfläche des Rastarms angrenzt. Einerseits wird durch die Ausnehmung die Elastizität im Bereich des Anschlusses des Rastarms an die Unterlegplatte so erhöht, dass der Rastarm im Gebrauch eine für die Rastverbindung optimale Elastizität besitzt. Diese Wirkung tritt nicht nur ein, wenn die Unterlegplatten aus einem Kunststoffmaterial gefertigt sind, sondern auch dann, wenn sie aus Metallblech bestehen. Darüber hinaus steht bei aus einem Kunststoffmaterial gefertigten Unterlegplatten das im Bereich der Ausnehmung ausgesparte Materialvolumen für die Formgebung des jeweiligen Rastarms zur Verfügung.

Als Anschlag für den Rastvorsprung dient bei einem erfindungsgemäßen System beispielsweise ein die Durchgangsöffnung der Führungsplatte mindestens abschnittsweise begrenzender Randbereich der Oberseite der Führungsplatte. Neben einer einfachen Formgebung hat dies den weiteren Vorteil, dass das freie Ende des als Rastelement dienenden Rastarms problemlos erreicht werden kann, wenn die Verbindung zwischen der Führungsplatte und der Unterlegplatte beispielsweise für einen Tausch der Führungsplatte nachträglich gelöst werden soll.

Optimiert werden kann die Verrastung von Führungsplatte und Unterlegplatte bei Anordnung der Verrastung in einer Öffnung dadurch, dass mindestens zwei gemeinsam durch die Öffnung der Führungsplatte greifende Rastarme vorgesehen sind und jedem Rastarm jeweils eine in die die Öffnung begrenzende Umfangsfläche eingeformte Ausnehmung zugeordnet ist, in der der jeweilige Rastarm sitzt. Durch die an mindestens zwei Stellen vorgesehene Verrastung von Unterlegplatte und Führungsplatte zentriert sich die Führungsplatte beim Aufsetzen auf die Unterlegplatte selbsttätig und wird ebenso selbsttätig in der jeweils optimalen Position gehalten.

Wie bereits erläutert, sind bei vielen bekannten Schienenbefestigungssystemen die Führungsplatten jeweils mit einer zentralen Öffnung versehen, durch die bei fertig montiertem System ein als Schraube, Schraubenbolzen oder Nagel ausgebildetes Spannelement geführt ist. Das Spannelement verspannt dabei direkt oder indirekt ein auf der Führungsplatte abgestütztes Federelement gegen den jeweiligen Untergrund, welches die zum Niederhalten der mit dem erfindungsgemäßen System zu befestigenden Schiene benötigte Kraft auf den Fuß der Schiene ausübt.

Im Fall, dass das Spannelement direkt mit dem jeweiligen Untergrund verbunden werden soll, ist in der Unterlegplatte eine zu der Öffnung der Führungsplatte korrespondierende Öffnung vorzusehen, so dass bei der Montage das Spannelement durch die Öffnung der Führungsplatte und die zugeordnete Öffnung der Unterlegplatte zu dem Untergrund geführt werden kann.

Insbesondere in Kombination mit einer seitlich des Rastarms in die Unterlegplatte eingebrachten Ausnehmung erweist sich die seitlich von dem jeweiligen Rastarm mindestens abschnittsweise begrenzte Öffnung als besonders vorteilhaft, weil dann eine besonders große Elastizität des in diesem Fall nur noch über nach Art von Torsionsfedern wirkende Stege mit der Unterlegplatte verbundenen Rastarms gewährleistet werden kann.

Um jede Einschränkung des für das Durchführen des Spannmittels durch die Durchgangsöffnung der Führungsplatte effektiv nutzbaren Querschnitts zu vermeiden, sollte die Tiefe der dem Rastarm jeweils zugeordneten, in die die Öffnung begrenzende Umfangsfläche eingeformte Ausnehmung mindestens der Dicke des jeweils zugeordneten Rastarms entspricht. Bei dieser Ausgestaltung nimmt die Ausnehmung den Rastarm auf, so dass der Rastarm bei mit der Unterlegplatte verkoppelter Führungsplatte in keiner Weise mehr in den für das Spannelement nutzbaren Öffnungsquerschnitt der Durchgangsöffnung der Führungsplatte vorsteht.

Sowohl die Führungsplatte als auch die Unterlegplatte können in an sich bekannter Weise aus einem Kunststoffmaterial gefertigt sein.

Zur Einsparung von Material und Gewicht können dabei sowohl in die Führungsplatte als auch in die Unterlegplatte von der Unterseite der jeweiligen Platte her Ausnehmungen eingeformt sein. Indem diese Ausnehmungen durch Rippen voneinander getrennt sind, kann eine optimierte Steifigkeit der jeweiligen Platte erzielt werden.

Besonders praxisgerecht erweist sich ein erfindungsgemäßes System dann, wenn die Unterlegplatte zwei gegenüberliegend zueinander angeordnete Seitenabschnitte aufweist, die zwischen sich die Aufstandfläche begrenzen. Auf jedem der Seitenabschnitte kann dann jeweils eine Führungsplatte sitzen, die jeweils durch eine Rastverbindung an der Unterlegplatte gehalten ist. Auf diese Weise steht eine komplette Baueinheit zur Verfügung, die auf einfache Weise montierbar ist und gleichzeitig die Voraussetzung dafür schafft, dass alle für die Befestigung der jeweiligen Schiene benötigten weiteren Bauteile problemlos den für ihre Funktion optimalen Platz finden.

Um Letzteres zusätzlich zu unterstützen, können bei der mindestens einen Führungsplatte eines erfindungsgemäßen Systems in ebenfalls an sich bekannter Weise an der freien Oberseite Formelemente, wie Vorsprünge und Einsenkungen, zum Führen eines auf der Führungsplatte abstützbaren Federelements ausgebildet sein.

Eine Abstützung der Führungsplatte an der Unterlegplatte kann auch dadurch unterstützt werden, dass die Unterlegplatte an mindestens einem ihrer beiden einander gegenüberliegenden seitlichen Enden jeweils eine Schulter aufweist, an der die jeweils zugeordnete Führungsplatte abgestützt ist. Eine für die praktische Nutzung besonders geeignete Ausgestaltung der Erfindung zeichnet sich dabei dadurch aus, dass die Unterlegplatte an jedem ihrer seitlichen Enden eine Schulter aufweist, dass an jeder der Schultern jeweils eine Führungsplatte abgestützt ist, dass die Führungsplatten die auf der Unterlegplatte vorgesehene Aufstandfläche für die Schiene seitlich begrenzen und dass jede der Führungsplatten durch eine Rastverbindung an der Unterlegplatte gehalten ist.

Dabei eignet sich die erfindungsgemäße Verrastung von Führungsplatte und Unterlegplatte insbesondere für solche Systeme, bei denen die Führungsplatte als Winkelführungsplatte mit einem auf dem der Führungsplatte zugeordneten Seitenabschnitt der Unterlegplatte aufliegenden Führungsabschnitt und einem Führungsabschnitt ausgebildet ist, der an der zugeordneten Seite der Unterlegplatte anliegt.

Soll ein erfindungsgemäßes Schienenbefestigungssystem eine definierte Nachgiebigkeit in einer zur Oberseite der Unterlegplatte senkrecht ausgerichteten Richtung besitzen, kann dies in bekannter Weise dadurch gewährleistet werden, dass eine elastische Lage vorgesehen wird, die auf der Aufstandfläche der Unterlegplatte liegt. Um auch deren Montage möglichst zu vereinfachen, kann die elastische Lage mittels der mit der Unterlegplatte verrasteten Führungsplatte an der Unterlegplatte gehalten sein. Dies kann dadurch bewerkstelligt werden, dass die elastische Lage und die Führungsplatte zumindest abschnittsweise überlappend angeordnet sind, so dass die mit der Unterlegplatte verrastete Führungsplatte die elastische Lage formschlüssig an der Unterlegplatte hält. Zum selben Zweck kann die Führungsplatte mindestens eine Ausnehmung aufweisen, in die ein Vorsprung der elastischen Lage greift.

Nachfolgend wird die Erfindung anhand einer ein Ausführungsbeispiel darstellenden Zeichnung näher erläutert. Es zeigen:
- Fig. 1: einen unter Verwendung eines erfindungsgemäßen Systems gebildeten Befestigungspunkt für eine Schiene in fertig montierter Stellung in einer in Längsrichtung der Schwelle teilweise geschnittenen Ansicht;

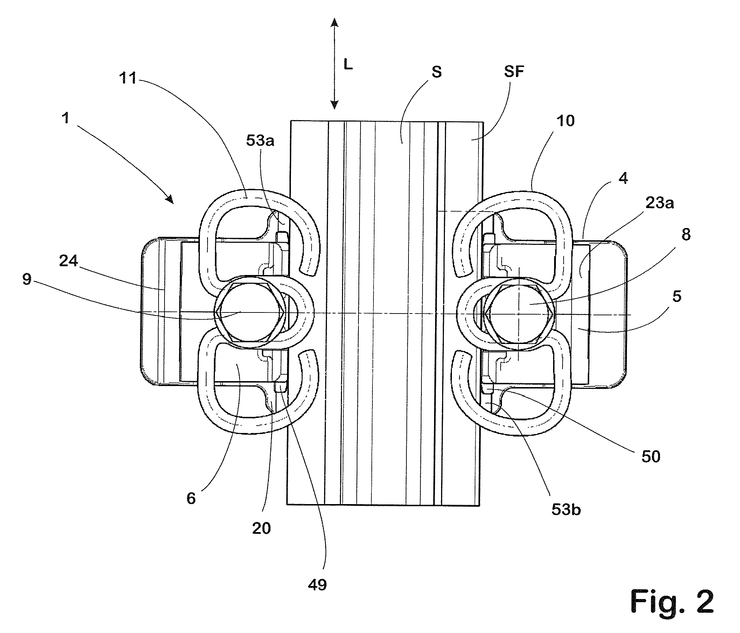

- Fig. 2: den Befestigungspunkt gemäß Fig. 1 in einer Ansicht von oben;

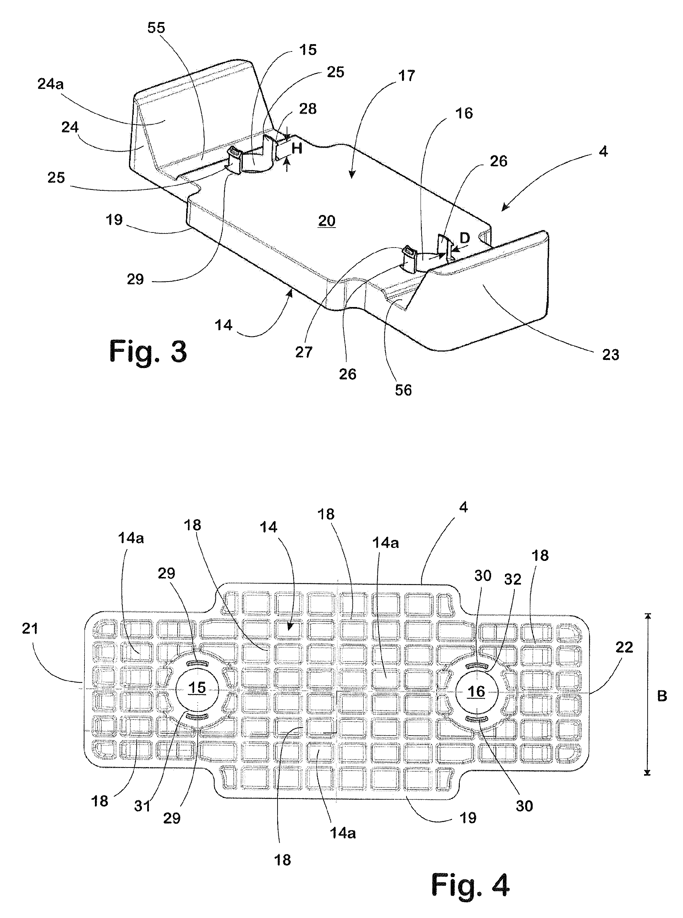

- Fig. 3: eine in dem in Fig. 1 dargestellten System eingesetzte Unterlegplatte in perspektivischer Ansicht;
- Fig. 4: die Unterlegplatte gemäß Fig. 3 in einer Ansicht von unten;

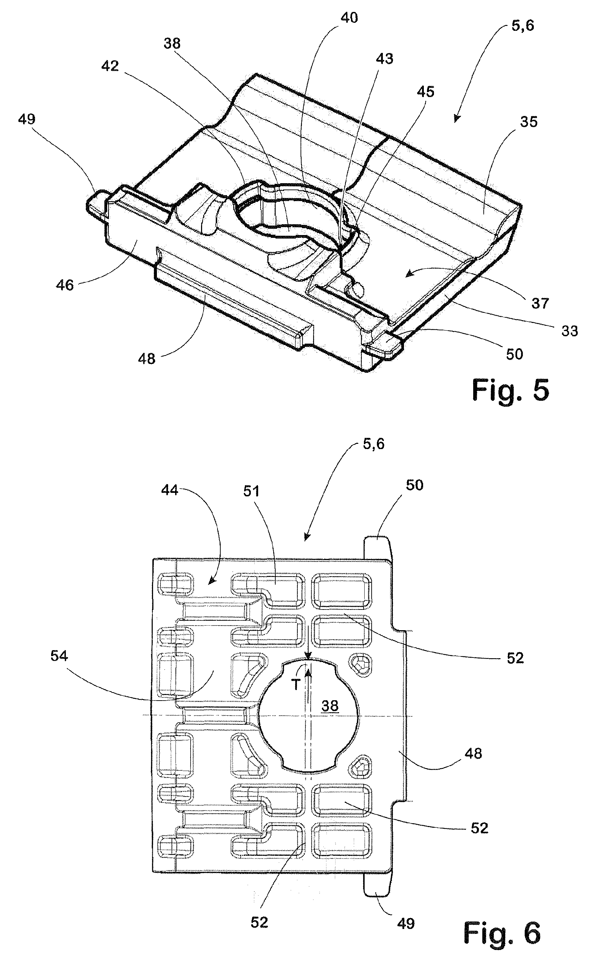

- Fig. 5: eine in dem in Fig. 1 dargestellten System eingesetzte Führungsplatte in perspektivischer Ansicht;
- Fig. 6: die Führungsplatte gemäß Fig. 5 in einer Ansicht von unten.

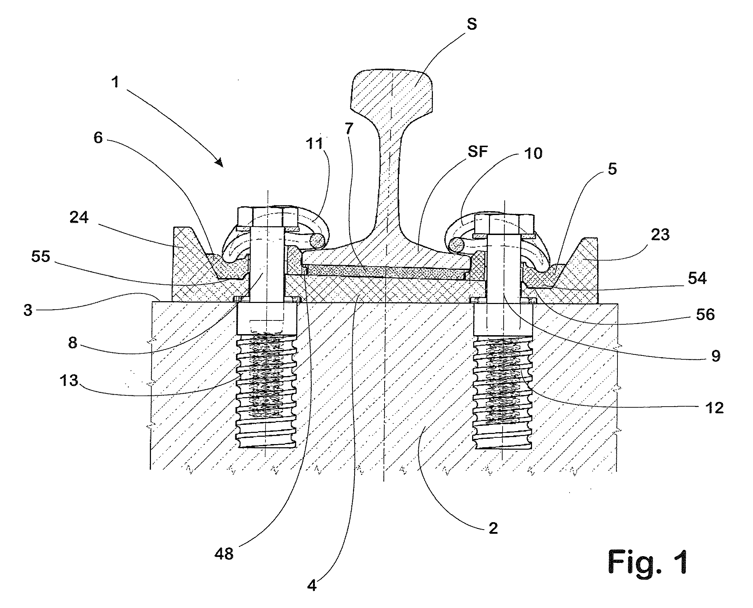

Der in Figur 1 gezeigte Befestigungspunkt 1 zum Befestigen einer Schiene S umfasst eine aus Beton gefertigte, hier nur im Ausschnitt gezeigte Schwelle 2, an deren Oberseite eine ebene Auflagefläche 3 ausgebildet ist.

Auf der Schwelle 2 ist die Schiene S mittels eines Systems befestigt, das eine auf der Auflagefläche 3 der Schwelle 2 liegende Unterlegplatte 4, zwei Führungsplatten 5,6, eine auf der Unterlegplatte 4 aufliegende elastische Lage 7, zwei als konventionelle Schwellenschrauben ausgebildete Spannelemente 8,9, zwei nach Art von ω-förmigen Spannklemmen ausgebildete Federelemente 10,11 sowie zwei Kunststoffdübel 12,13 umfasst.

Die Kunststoffdübel 12,13 sind mit Abstand zueinander in die Schwelle 2 eingegossen. Dabei ist ihre Öffnung jeweils bündig zur ebenen Auflagefläche 3 der Schwelle 2 und ihre Längsachse im Wesentlichen senkrecht zur Auflagefläche 3 ausgerichtet.

Die Unterlegplatte 4 liegt mit ihrer flachen Unterseite 14 flach auf der Auflagefläche 3 der Schwelle 2 auf. In die Unterlegplatte 4 sind Durchgangsöffnungen 15,16 eingeformt, die jeweils von der Oberseite 17 zur Unterseite 14 der Unterlegplatte 4 führen. Die Durchgangsöffnungen 15,16 sind jeweils derart beabstandet, dass sie in Montagestellung fluchtend zu jeweils einem der Kunststoffdübel 12,13 sitzen. Gleichzeitig sind die Form und der Durchmesser der Durchgangsöffnungen 15,16 so bemessen, dass die Spannelemente 8,9 mit ihrem Gewindeabschnitt mit ausreichendem Spiel frei durch sie hindurch geschoben werden können.

Von der Unterseite 14 her sind in regelmäßigen Abständen verteilte Ausnehmungen 14a in die Unterlegplatte 4 eingeformt, die jeweils einen rechtwinkligen Öffnungsquerschnitt besitzen und durch in regelmäßigen Abständen angeordnete, einander kreuzförmig schneidende Rippen 18 voneinander getrennt sind. Durch die Ausnehmungen 14a ist das Materialvolumen und damit einhergehend das Gewicht der Unterlegplatte 4 gegenüber einer massiv ausgebildeten Unterlegplatte deutlich vermindert. Gleichzeitig stellt die durch die Rippen 18 gebildete Rippenstruktur eine optimierte Steifigkeit der Unterlegplatte 4 sicher.

Die Unterlegplatte 4 weist in Draufsicht eine langgestreckte, rechtwinklige Form auf, deren Mittelabschnitt 19 verbreitert ist, um eine vergrößerte Aufstandfläche 20 für die Schiene S zu bilden. Wie üblich ist die Unterlegplatte 4 bei fertig montiertem Befestigungspunkt 1 quer zur Längserstreckung L der Schiene S ausgerichtet. Ihre Schmalseiten 21,22 erstrecken sich dabei parallel zur Schiene S.

An ihren an die Schmalseiten 21,22 angrenzenden seitlichen Enden weist die Unterlegplatte 4 jeweils eine sich über ihre Breite B erstreckende Schulter 23,24 auf. Die Schultern 23,24 haben auf ihrer der Schiene S zugewandten Seite jeweils eine Schrägfläche 23a,24a, die ausgehend von der Aufstandfläche 20 in Richtung der jeweiligen Schmalseite 21,22 der Unterlegplatte 4 ansteigt.

Im Bereich der Durchgangsöffnungen 15,16 ist an die Unterlegplatte 4 jeweils ein Paar von Rastarmen 25,26 angeordnet, die gegenüberliegend zueinander und angrenzend an den Rand der jeweiligen Durchgangsöffnung 15,16 positioniert sind. Die Rastarme 25,26 tragen an ihren freien Enden in einer Höhe H über der ebenen Aufstandfläche 20 der Unterlegplatte 4 jeweils einen seitlich ausgerichteten, von der zugeordneten Durchgangsöffnung 15,16 wegweisenden Rastvorsprung 27,28. Auch der Abstand der Rastarme 25,26 voneinander ist so bemessen, dass die Spannelemente 8,9 mit ihrem Gewindeabschnitt jeweils mit ausreichendem Spiel frei durch den seitlich durch die Rastarme 25,26 begrenzten Raum geschoben werden können.

Auf der von der jeweiligen Durchgangsöffnung 15,16 abgewandten Seite der Rastarme 25,26 ist in die Unterlegplatte 4 jeweils eine zusätzliche Ausnehmung 29,30 eingeformt, die als schlitzförmige Durchgangsöffnung ausgebildet ist und seitlich unmittelbar an den jeweiligen Rastarm 25,26 angrenzt. Auf diese Weise sind die Rastarme 25,26 jeweils nur über einen schmalen, stegförmigen Abschnitt 31,32 mit dem übrigen Körper der insgesamt einstückig ausgebildeten Unterlegplatte 4 verbunden.

Die ebenfalls aus Kunststoffmaterial bestehenden Führungsplatten 5,6 besitzen jeweils einen Führungsabschnitt 33 und einen Schulterabschnitt 35, der bei auf der Unterlegplatte 4 angeordneter Führungsplatte 5,6 an der jeweils zugeordneten Schulter 23,24 der Unterlegplatte 4 abgestützt ist.

In den Führungsabschnitt 33 der Führungsplatten 5,6 ist jeweils eine von der freien Oberseite 37 der jeweiligen Führungsplatte 5,6 zu deren der Unterlegplatte 4 zugeordneten Unterseite führende Durchgangsöffnung 38 eingeformt. Deren Lage ist so an die Position der jeweils zugeordneten Durchgangsöffnung 15,16 der Unterlegplatte 4 angepasst, dass die Durchgangsöffnungen 38 bei auf der Unterlegplatte 4 aufgesetzten Führungsplatten 5,6 fluchtend zur ihnen ausgerichtet sind.

Form und Durchmesser der Durchgangsöffnungen 38 der Führungsplatten 5,6 sind so bemessen, dass die Spannelemente 8,9 mit ihrem Gewindeabschnitt mit leichtem Spiel durch die Durchgangsöffnungen 38 geschoben werden können, so dass die Führungsplatten 5,6 bei in die Kunststoffdübel 12,13 eingeschraubten Spannelementen 8,9 eng durch die Spannelemente 8,9 in ihrer jeweiligen Lage relativ zur Schwelle 2 und den anderen Bauteilen des Systems 1 gehalten sind.

In die die Durchgangsöffnungen 38 der Führungsplatten 5,6 umgrenzenden Umfangsflächen 40 sind zwei nutförmige Ausnehmung 42,43 eingeformt, die sich jeweils von der Oberseite 37 zur Unterseite 44 der Führungsplatten 5,6 erstrecken. Die Ausnehmungen 42,43 sind dabei gegenüberliegend zueinander an einer Position angeordnet, die der Position der jeweils zugeordneten Rastarme 25,26 der Unterlegplatte 4 entspricht. Gleichzeitig ist die Tiefe T und die Breite der Ausnehmungen 42,43 so an die Dicke D und die Breite der Rastarme 25,26 angepasst, dass bei auf die Unterlegplatte 4 aufgesetzten und an den Schultern 23,24 anliegenden Führungsplatten 5,6 die Rastarme 25,26 vollständig in der jeweils zugeordneten Ausnehmung 42,43 sitzen. Gleichzeitig ist die Höhe H, mit der die Rastvorsprünge 27,28 oberhalb der Oberseite 37 der Führungsplatten 5,6 angeordnet sind, so bemessen, dass die Rastvorsprünge 27,28 bei auf der Unterlegplatte 4 sitzenden Führungsplatten 5,6 auf dem die jeweilige Ausnehmung 42,43 begrenzenden Randbereich 45 der freien Oberseite 37 der Führungsplatten 5,6 aufliegen. Der Randbereich 45 bildet dementsprechend einen Anschlag für die Rastarme 25,26, so dass jede Führungsplatte 5,6 bei auf der Unterlegplatte 4 aufgesetzten Führungsplatten 5,6 eine Rastverbindung gebildet ist, durch die die Führungsplatte 5,6 jeweils formschlüssig und unverlierbar an der Unterlegplatte 4 gehalten sind.

An ihrer der Schiene S zugeordneten Stirnseite ist an den Führungsabschnitten 33 der Führungsplatten 5,6 jeweils eine Anlagefläche 46 vorhanden, an der bei fertig montiertem Befestigungspunkt 1 der Schienenfuß SF der Schiene S seitlich geführt ist. An ihrem unteren Rand, an dem sie zur Unterseite 44 der Führungsplatte 5,6 übergeht, sind in die Anlagefläche 46 der Führungsplatten jeweils ein leistenartiger Vorsprung 48 ausgebildet. Zusätzlich weisen die Führungsplatten 5,6 an ihren kurzen Seiten jeweils einen seitlich von dem Führungsabschnitt 33 in Verlängerung der Anlagefläche 46 abstehenden Vorsprung 49,50 auf, der mit einem bestimmten Abstand zur Unterseite 44 der Führungsplatte 5,6 angeordnet ist.

Von der Unterseite 44 her sind wie bei der Unterlegplatte 4 auch in die Führungsplatten 5,6 zur Gewichts- und Materialeinsparung Ausnehmungen 51 eingeformt, die ebenso wie bei der Unterlegplatte 4 durch Rippen 52 voneinander getrennt sind, welche die Formsteifigkeit der Führungsplatten 5,6 gewährleisten.

Die in Montagestellung auf der Aufstandfläche 20 der Unterlegplatte 4 liegende elastische Lage 7 besteht aus einem elastischen Material mit definierter Nachgiebigkeit und ermöglicht eine entsprechend definierte elastische Absenkung der Schiene S beim Überfahren durch ein hier nicht gezeigtes Schienenfahrzeug. Die Form der elastischen Lage 7 entspricht dabei der Form der Aufstandfläche 20 der Unterlegplatte 9 und ist so bemessen, dass die elastische Lage 7 die Aufstandfläche 20 bis auf einen schmalen Randbereich vollständig abdeckt. Dabei sind an den den Führungsplatten 5,6 zugeordneten Schmalseiten der elastischen Lage 7 jeweils zungenartige Vorsprünge 53a,53b angeformt, deren Position und Form so an den leistenartigen Vorsprung 48 und die seitlichen Vorsprünge 49,50 der Führungsplatten 5,6 angepasst sind, dass bei auf der Unterlegplatte 4 liegender elastischer Lage 7 und mit der Unterlegplatte 4 verrasteten Führungsplatten 5,6 die seitlichen Vorsprünge 49,50 der Führungsplatten 5,6 auf die zungenartigen Vorsprünge 53a,53b der elastischen Lage 7 drücken und die elastische Lage 7 so verliersicher zwischen den Führungsplatten 5,6 gehalten ist.

Der jeweilige Schulterabschnitt 35 bildet auf der Unterseite 44 der Führungsplatten 5,6 einen sich über die Breite der Führungsplatten 5,6 erstreckenden, nach unten vorstehenden Absatz 54 geringer Höhe. Bei fertig montiertem Befestigungspunkt 1 sitzt der jeweilige Absatz 54 der Führungsplatten 5,6 in jeweils einer Rille 55,56, die von der Oberseite 14 her in die Aufstandfläche 20 der Unterlegplatte 4 eingeformt ist. Dabei grenzen die Rillen 55,56 die jeweilige Schrägfläche 23a,24a der Schultern 23,24 an.

Die zum Aufbringen der erforderlichen Niederhaltekräfte vorgesehenen Federelemente 10,11 sind als ω-förmige Spannklemmen ausgebildet. Die Federelemente 10,11 weisen dementsprechend einen U-förmigen Mittelabschnitt auf, auf den im fertig montierten Zustand des Befestigungspunktes 1 das jeweils zugeordnete Spannelement 8,9 mit seinem Schraubenkopf wirkt. Die Schenkel des Mittelabschnitts der Federelemente 10,11 gehen in jeweils einen Haltearm über, mit dem das Federelement 10,11 in Montagestellung federnd elastisch auf die ihm jeweils zugeordnete Seite des Schienenfußes SF drückt. Die Endabschnitte der Haltearme sind dabei in einem kontinuierlichen Kurvenzug in Richtung des Mittelabschnitts der Federelemente 10,11 gebogen und enden in einem Abstand von dem Mittelabschnitt, der geringer als die kleinste Dicke des Federdrahts ist, aus dem die Federelemente 10,11 gebogen sind. Auf diese Weise ist sichergestellt, dass die Federelemente 10,11 sich auch dann nicht verhaken, wenn sie lose und ungeordnet in einem Transportbehälter gelagert werden.

Aus jeweils einer Unterlegplatte 4 und den mit ihr verrasteten Führungsplatten 5,6 sowie der von den Führungsplatten 5,6 auf der Unterlegplatte 4 gehaltenen elastischen Lage 7 wird im Werk des Herstellers eine Baueinheit vormontiert. Eine solche Baueinheit wird zur Montage des Befestigungspunkts 1 so auf die Auflagefläche 3 der Schwelle 2 gesetzt, dass die Durchgangsöffnungen 15,16 der Unterlegplatte 4 und die Durchgangsöffnungen 40 der Führungsplatten 5,6 fluchtend zu den in der Schwelle 2 sitzenden Kunststoffdübeln 12,13 ausgerichtet sind. Anschließend werden die Federelemente 10,11 in an sich bekannter Weise in einer Vormontagestellung auf die zugeordnete Führungsplatte 5,6 gesetzt, in der ihre Federarme noch nicht in den zwischen den Führungsplatten 5,6 vorhandenen, für die Schiene S vorgesehenen Bereich reichen, und mittels der in jeweils einen der Dübel 12,13 eingeschraubten Spannelemente 8,9 so vorgespannt, dass sie ihre Vormontageposition selbsttätig beibehalten, jedoch in Richtung der Schiene S verschoben werden können. Daraufhin wird die Schiene S auf die elastische Lage 7 gesetzt. Bei auf der elastischen Lage 7 sitzender Schiene S greifen die leistenartigen Vorsprünge 48 der Führungsplatten 5,6 seitlich unter den Schienenfuß SF. Nun werden die Federelemente 10,11 in Richtung der Schiene S bis zu einer Endposition geschoben, in der ihre Federarme jeweils auf den Schienenfuß SF drücken. Dann werden die Spannelemente 8,9 angezogen, bis die Federelemente 10,11 die vorgeschriebene Niederhaltekraft auf den Fuß SF der Schiene S ausüben.

### BEZUGSZEICHEN

- 1: Befestigungspunkt
- 2: Schwelle
- 3: Auflagefläche
- 4: Unterlegplatte
- 5, 6: Führungsplatten
- 7: elastische Lage
- 8, 9: Spannelemente (Schwellenschrauben)
- 10, 11: Federelemente (Spannklemmen)
- 12, 13: Kunststoffdübel
- 14: Unterseite der Unterlegplatte 4
- 14a: Ausnehmungen der Unterlegplatte 4
- 15, 16: Durchgangsöffnungen der Unterlegplatte 4
- 17: Oberseite der Unterlegplatte 4
- 18: Rippen der Unterlegplatte 4
- 19: Mittelabschnitt der Unterlegplatte 4
- 20: Aufstandfläche der Unterlegplatte 4
- 21, 22: Schmalseiten der Unterlegplatte 4
- 23, 24: Schulter der Unterlegplatte 4
- 23a, 24a: Schrägflächen der Schultern 23,24
- 25, 26: Rastarme der Unterlegplatte 4
- 27, 28: Rastvorsprünge
- 29, 30: schlitzförmige Ausnehmungen der Unterlegplatte 4
- 31, 32: stegförmige Abschnitte der Unterlegplatte 4
- 33: Führungsabschnitt der Führungsplatten 5,6
- 35: Schulterabschnitt der Führungsplatten 5,6
- 37: freie Oberseite der Führungsplatten 5,6
- 38: Durchgangsöffnung der Führungsplatten 5,6
- 40: Umfangsflächen der Durchgangsöffnungen 38
- 42, 43: Ausnehmungen in den Durchgangsöffnungen 38
- 44: Unterseite der Führungsplatten 5,6
- 45: die jeweilige Ausnehmung 42,43 begrenzender Randbereich der freien Oberseite 37
- 46: Anlagefläche der Führungsplatten 5,6
- 48: leistenartiger Vorsprung der Führungsplatten 5,6
- 49, 50: seitlich abstehender Vorsprung der Führungsplatten 5,6
- 51: Ausnehmungen der Führungsplatten 5,6
- 52: Rippen der Führungsplatten 5,6
- 53a, 53b: zungenartige Vorsprünge der elastischen Lage 7
- 54: Absatz des Stützabschnitts 35 der Führungsplatten 5,6
- 55, 56: Rillen der Unterlegplatte 4
- B: Breite der Unterlegplatte 4
- D: Dicke der Rastarme
- H: Höhe der Rastvorsprünge 27,28 über der ebenen Aufstandfläche 20 der Unterlegplatte 4
- L: Längserstreckung der Schiene S ausgerichtet.
- S: Schiene
- SF: Schienenfuß der Schiene S
- T: Tiefe der Ausnehmungen 42,43

## Patentansprüche

1. System zum Befestigen einer Schiene (S) auf einem Untergrund mit
- einer Unterlegplatte (4), die eine Aufstandfläche (20) für die zu befestigende Schiene (S) aufweist, und
- mindestens einer Führungsplatte (5,6), die auf der Unterlegplatte (4) sitzt und eine von ihrer freien Oberseite (37) zu ihrer auf der Unterlegplatte (4) aufliegenden Unterseite (44) führende Durchgangsöffnung (38) für ein Spannelement (8,9) aufweist, das bei fertig montiertem System durch die Durchgangsöffnung (38) geführt und mit dem Untergrund fest verbunden ist,
- wobei eine Rastverbindung zwischen der Unterlegplatte (4) und der Führungsplatte (5,6) im Bereich der Durchgangsöffnung (38) der Führungsplatte (5,6) durch mindestens einen Rastarm (25,26) gebildet ist, der durch die Durchgangsöffnung (38) der Führungsplatte (5,6) greift und an seinem freien Ende einen Rastvorsprung (27,28) aufweist, der mit einem an der Führungsplatte (5,6) ausgebildeten Anschlag formschlüssig zusammenwirkt,
**dadurch gekennzeichnet, dass** in die die Durchgangsöffnung (38) der Führungsplatte (5,6) begrenzende Umfangsfläche (40) eine Ausnehmung (42,43) eingeformt ist, in der der jeweils zugeordnete Rastarm (25,26) sitzt.

2. System nach einem der voranstehenden Ansprüche, **dadurch gekennzeichnet, dass** dem Rastarm (25,26) eine in die Unterlegplatte (4) eingeformte Ausnehmung (29,30) zugeordnet ist, die seitlich an eine Seitenfläche des Rastarms (25,26) grenzt.

3. System nach einem der voranstehenden Ansprüche, **dadurch gekennzeichnet, dass** der Durchgangsöffnung (38) der Führungsplatte (5,6) eine in die Unterlegplatte (4) eingeformte Durchgangsöffnung (15,16) zugeordnet ist.

4. System nach Anspruch 3, **dadurch gekennzeichnet, dass** der Rastarm (25,26) mit einer der Durchgangsöffnung (15,16) der Unterlegplatte (4) zugeordneten Seitenfläche an diese Durchgangsöffnung (15,16) grenzt.

5. System nach einem der voranstehenden Ansprüche, **dadurch gekennzeichnet, dass** der Anschlag für den Rastvorsprung (27,28) durch einen die Durchgangsöffnung (38) der Führungsplatte (5,6) mindestens abschnittsweise begrenzenden Randbereich (45) der Oberseite (37) der Führungsplatte (5,6) gebildet ist.

6. System nach einem der voranstehenden Ansprüche, **dadurch gekennzeichnet, dass** mindestens zwei gemeinsam durch die Durchgangsöffnung (38) der Führungsplatte (5,6) greifende Rastarme (25,26) vorgesehen sind und jedem Rastarm (25,26) jeweils eine in die die Durchgangsöffnung (38) begrenzende Umfangsfläche (40) eingeformte Ausnehmung (42,43) zugeordnet ist, in der der jeweilige Rastarm (25,26) sitzt.

7. System nach einem der voranstehenden Ansprüche, **dadurch gekennzeichnet, dass** die Tiefe (T) der dem Rastarm (25,26) jeweils zugeordneten, in die die Durchgangsöffnung (38) begrenzende Umfangsfläche (40) eingeformten Ausnehmung (42,43) mindestens der Dicke (D) des jeweils zugeordneten Rastarms (25,26) entspricht.

8. System nach einem der voranstehenden Ansprüche, **dadurch gekennzeichnet, dass** die Führungsplatte (5,6) aus einem Kunststoffmaterial gefertigt ist.

9. System nach einem der voranstehenden Ansprüche, **dadurch gekennzeichnet, dass** die Unterlegplatte (4) aus einem Kunststoffmaterial geformt ist.

10. System nach einem der voranstehenden Ansprüche, **dadurch gekennzeichnet, dass** in die Unterlegplatte (4) oder die Führungsplatte (5,6) von deren jeweiliger Unterseite (14;44) her Ausnehmungen (14a;51) eingeformt sind, die voneinander durch Rippen (18;52) getrennt sind.

11. System nach einem der voranstehenden Ansprüche, **dadurch gekennzeichnet, dass** die Unterlegplatte (4) an mindestens einem ihrer seitlichen Enden eine Schulter (23,24) aufweist, an der die jeweils zugeordnete Führungsplatte (5,6) abgestützt ist.

12. System nach Anspruch 11, **dadurch gekennzeichnet, dass** an jeder der Schultern (23,24) jeweils eine Führungsplatte (5,6) abgestützt ist, dass die Führungsplatten die auf der Unterlegplatte (4) vorgesehene Aufstandfläche (20) für die Schiene (S) seitlich begrenzen und dass jede der Führungsplatten (5,6) durch jeweils eine Rastverbindung an der Unterlegplatte (4) gehalten ist.

13. System nach einem der voranstehenden Ansprüche, **dadurch gekennzeichnet, dass** es zusätzlich eine elastische Lage (7) umfasst, die auf der Aufstandfläche (20) der Unterlegplatte (4) liegt und auf der die zu befestigende Schiene (S) im fertig montierten Zustand steht.

14. System nach Anspruch 13, **dadurch gekennzeichnet, dass** die elastische Lage (7) mittels der mit der Unterlegplatte (4) verrasteten Führungsplatte (5,6) an der Unterlegplatte (4) gehalten ist.

15. System nach Anspruch 14, **dadurch gekennzeichnet, dass** die Führungsplatte (5,6) mindestens einen Vorsprung (49,50) aufweist, der bei fertig montiertem System einen korrespondierenden Vorsprung (53a,53b) der elastischen Lage (7) überdeckt.

## Claims

1. A system for fastening a rail (S) on a subsurface, comprising
- a support plate (4) having a contact surface (20) for the rail (S) to be fastened, and
- at least one guide plate (5, 6) that is seated on said support plate (4) and has a passage opening (38) for a clamping element (8, 9), which leads from the free top side (37) thereof to the bottom side (44) thereof which rests on said support plate (4), which clamping element is guided, with the system fully installed, through the passage opening (38) and is fixedly connected to the subsurface,
- wherein a latching connection between said support plate (4) and said guide plate (5, 6) is formed in the region of said passage opening (38) of said guide plate (5, 6) by at least one latch arm (25, 26), which latch arm engages through said passage opening (38) of said guide plate (5, 6) and has a latch projection (27, 28) on the free end thereof, which interacts in an interlocking manner with a stop formed on said guide plate (5, 6),
**characterised in that** a recess (42, 43) is moulded into the circumferential surface (40) delimiting said passage opening (38) of said guide plate (5, 6), in which recess the respectively associated latch arm (25, 26) is seated.

2. The system as claimed in any one of the preceding claims, **characterised in that** said latch arm (25, 26) has associated therewith a recess (29, 30) moulded into said support plate (4), which recess laterally borders onto a lateral surface of said latch arm (25, 26).

3. The system as claimed in any one of the preceding claims, **characterised in that** said passage opening (38) of said guide plate (5, 6) has associated therewith a passage opening (15, 16) moulded into said support plate (4).

4. The system as claimed in claim 3, **characterised in that** said latch arm (25, 26) adjoins said passage opening (15, 16) with a lateral surface that is associated with said passage opening (15, 16) of said support plate (4).

5. The system as claimed in any one of the preceding claims, **characterised in that** the stop for the latch projection (27, 28) is formed by an edge region (45) of the top side (37) of said guide plate (5, 6), which edge region delimits the passage opening (38) of said guide plate (5, 6) at least in sections.

6. The system as claimed in any one of the preceding claims, **characterised in that** at least two latch arms (25, 26) are provided, which commonly engage through said passage opening (38) of said guide plate (5, 6), and each latch arm (25, 26) has associated therewith respectively one recess (42, 43) that is moulded into said circumferential surface (40) delimiting said passage opening (38), in which recess the respective latch arm (25, 26) is seated.

7. The system as claimed in any one of the preceding claims, **characterised in that** the depth (T) of the recess (42, 43) that is respectively associated with said latch arm (25, 26) and is moulded into the circumferential surface (40) that delimits said passage opening (38) at least corresponds to the thickness (D) of the respectively associated latch arm (25, 26).

8. The system as claimed in any one of the preceding claims, **characterised in that** said guide plate (5, 6) is made from a plastics material.

9. The system as claimed in any one of the preceding claims, **characterised in that** said support plate (4) is moulded from a plastics material.

10. The system as claimed in any one of the preceding claims, **characterised in that** recesses (14a; 51) are moulded into said support plate (4) or said guide plate (5, 6) from the respective bottom side (14; 44) thereof, which recesses are separated from each other by ribs (18; 52).

11. The system as claimed in any one of the preceding claims, **characterised in that** said support plate (4) has a shoulder (23, 24) on at least one of the lateral ends thereof, on which the respectively associated guide plate (5, 6) is supported.

12. The system as claimed in claim 11, **characterised in that** respectively one guide plate (5, 6) is supported on each of said shoulders (23, 24), **in that** said guide plates laterally delimit the contact surface (20) for the rail (S), which is provided on said support plate (4), and **in that** each of said guide plates (5, 6) is retained on said support plate (4) by respectively one latching connection.

13. The system as claimed in any one of the preceding claims, **characterised in that** it additionally comprises an elastic layer (7) which lies on said contact surface (20) of said support plate (4) and stands, in the fully mounted condition, on the rail (S) to be fastened.

14. The system as claimed in claim 13, **characterised in that** the elastic layer (7) is retained on said support plate (4) by means of the guide plate (5, 6) locked together with said support plate (4).

15. The system as claimed in claim 14, **characterised in that** said guide plate (5, 6) has at least one projection (49, 50), which in the fully mounted system covers a corresponding projection (53a, 53b) of said elastic layer (7).

## Revendications

1. Système pour fixer un rail (S) sur un support, comportant :
- une plaque de support (4) qui présente une surface d'appui (20) pour le rail (S) à fixer, et
- au moins une plaque de guidage (5, 6) qui repose sur la plaque de support (4) et qui présente une ouverture de passage (38) menant de sa face supérieure libre (37) à sa face inférieure (44) reposant sur la plaque de support (4) et destinée à un élément de serrage (8, 9) qui, une fois le montage du système achevé, est guidé à travers l'ouverture de passage (38) et est solidement relié au support,
- auquel cas un encliquetage est formé entre la plaque de support (4) et la plaque de guidage (5, 6) dans la zone de l'ouverture de passage (38) de la plaque de guidage (5, 6) par l'intermédiaire d'au moins un bras d'encliquetage (25, 26) qui pénètre à travers l'ouverture de passage (38) de la plaque de guidage (5, 6) et qui présente, à son extrémité libre, une partie saillante d'encliquetage (27, 28) coopérant par liaison de forme avec une butée formée sur la plaque de guidage (5, 6), **caractérisé en ce qu'**un évidement (42, 43), dans lequel repose le bras d'encliquetage (25, 26) respectivement associé, est ménagé dans la surface périphérique (40) délimitant l'ouverture de passage (38) de la plaque de guidage (5,6).

2. Système selon une des revendications précédentes, **caractérisé en ce qu'**un évidement (29, 30), ménagé dans la plaque de support (4) et côtoyant latéralement une des surfaces latérales du bras d'encliquetage (25, 26), est affecté au bras d'encliquetage (25, 26).

3. Système selon une des revendications précédentes, **caractérisé en ce qu'**une ouverture de passage (15, 16), ménagée dans la plaque de support (4), est affectée à l'ouverture de passage (38) de la plaque de support (5, 6).

4. Système selon la revendication 3, **caractérisé en ce que** le bras d'encliquetage (25, 26) avec une surface latérale affectée à l'ouverture de passage (15, 16) de la plaque de support (4) côtoie cette ouverture de passage (15, 16).

5. Système selon une des revendications précédentes, **caractérisé en ce que** la butée pour la partie saillante d'encliquetage (27, 28) est formée par une zone marginale (45) du côté supérieur (37) de la plaque de guidage (5, 6) délimitant au moins partiellement l'ouverture de passage (38) de la plaque de guidage (5, 6).

6. Système selon une des revendications précédentes, **caractérisé en ce que** l'on prévoit au moins deux bras d'encliquetage (25, 26) entrant en prise conjointement à travers l'ouverture de passage (38) de la plaque de guidage (5, 6) et un évidement (42, 43), ménagé respectivement dans la surface périphérique (40) délimitant l'ouverture de passage (38) de la plaque de guidage (5,6) et dans lequel est logé le bras d'encliquetage (25, 26) respectif, est affecté à chaque bras d'encliquetage (25, 26)

7. Système selon une des revendications précédentes, **caractérisé en ce que** la profondeur (T) de l'évidement (42, 43), ménagé dans la surface périphérique (40) délimitant l'ouverture de passage (38) et étant respectivement affecté au bras d'encliquetage (25, 26), correspond à au moins l'épaisseur (D) du bras d'encliquetage respectivement affecté (25, 26).

8. Système selon une des revendications précédentes, **caractérisé en ce que** la plaque de guidage (5, 6) est fabriquée à partir d'un matériau synthétique.

9. Système selon une des revendications précédentes, **caractérisé en ce que** la plaque de support (4) est conçue en un matériau synthétique.

10. Système selon une des revendications précédentes, **caractérisé en ce que** des évidements (14a ; 51) sont ménagés dans la plaque de support (4) ou plaque de guidage (5, 6) à partir du côté inférieur respectif (14 ; 44), et ces évidements (14a ; 51) sont mutuellement séparés par des nervures (18 ; 52).

11. Système selon une des revendications précédentes, **caractérisé en ce que** la plaque de support (4) présente, sur au moins une de ses extrémités latérales, un épaulement (23, 24) sur lequel s'appuie la plaque de guidage respectivement affectée (5,6).

12. Système selon la revendication 11, **caractérisé en ce qu'**une plaque de guidage (5, 6) s'appuie respectivement sur chacun des épaulements (23, 24), et que les plaques de guidage délimitent latéralement la surface d'appui (20) prévue sur la plaque de support (4) pour les rails (S), et que chaque plaque de guidage (5, 6) est maintenue par respectivement un encliquetage sur la plaque de support (4).

13. Système selon une des revendications précédentes, **caractérisé en ce qu'**il comporte ultérieurement une couche élastique (7) qui git sur la surface d'appui (20) de la plaque de support (4) et sur laquelle se trouve le rail (S) à fixer une fois le montage achevé.

14. Système selon la revendication 13, **caractérisé en ce que** la couche élastique (7) est maintenue sur la plaque de support (4) à l'aide de la plaque de guidage (5, 6) encliquetée avec la plaque de support (4).

15. Système selon la revendication 14, **caractérisé en ce que** la plaque de guidage (5, 6) présente au moins une saillie (49, 50), laquelle, lors du montage du système achevé, recouvre une saillie correspondante (53a, 53b) de la couche élastique (7).
